# EUROPEAN PATENT APPLICATION

(11) **EP 3 889 456 A1**
(43) Date of publication of application: **06.10.2021**
(21) Application number: 21155571.9
(22) Date of filing: 05.02.2021
(51) Int. Cl.: F16F 1/38, B60K 11/04

(54) **A FASTENER**

(30) Priority: 03.04.2020 EP 20168010
(71) Applicant: Illinois Tool Works INC., Glenview, IL 60025 (US)
(72) Inventor: CRIADO DEL PINO, Francisco, Illinois, 60025 (US); CUERVAS FLORIDO, Francisco, Illinois, 60025 (US); CIPRES BALLESTER, Ivan, Illinois, 60025 (US)
(74) Representative: HGF

(57) **Abstract**

There is provided a fastener for operably coupling a cooling module to a support frame, particularly of a vehicle, including a body, enclosingly defining an internal space and extending substantially within a first plane, including at least one coupling member, extending outwardly from a peripheral edge of said body along a first axis coplanar with said first plane and configured to be operably coupled to a bracket member of the support frame along said first axis; and an internal bearing member, provided within and operably coupled to said internal space of said body, having a journal receptacle therethrough configured to receivingly retain a coupling pin of the cooling module along a second axis that is substantially perpendicular to said first plane, wherein said internal bearing member is integrally formed with said body.

## Description

The present invention concerns a fastener for operably coupling a cooling module to a support frame, particularly of a vehicle. In particular, the present invention relates to a fastener, particularly a vibration-dampening fastener, that is less complex and less expensive to manufacture.

### BACKGROUND

A fastener is a device that serves to operably couple a first component, such as a cooling module, to a second component, such as a support frame for a vehicle. The fastener may be removably or permanently attachable to the respective components.

In the automotive industry, fasteners are commonplace to affix, for example, a cooling module to a support frame of a vehicle. There are two distinct types of fasteners that are used for this purpose: a first fastener which is attached, or pre-assembled, to an upper coupling pin of the cooling module for coupling to the support frame in a direction that is substantially perpendicular to a plane defined by the support frame; and a second fastener which is attached, or pre-assembled, to the support frame for receiving a lower coupling pin of a cooling module in a direction that is substantially coaxial with the plane defined by the support frame. The present invention relates to improvements in fasteners of the first type referred to above.

It is known to provide two-part fasteners, including an outer component, such as a body, and an inner component, such as a bearing member. The body is configured to couple the fastener to the support frame, and the bearing member is configured to couple the fastener to an upper coupling pin of the cooling module. The outer component is typically manufactured from a hard plastics material, and the inner component, a distinct and separate component, is typically manufactured from a softer elastomeric material designed to absorb vibrations, when in use. The two components are assembled to one another to form an assembled two-part fastener, which is then used to couple the cooling module to the support frame of a vehicle.

However, two-part fasteners have several drawbacks. Firstly, such fasteners are manufactured as two separate and distinct parts, composed of different materials, which increases manufacturing complexity and costs, and also requires assembly prior to use. Secondly, the inner component, composed of elastomeric material, is susceptible to wear during use.

Therefore, it is an object of the present invention to mitigate such drawbacks in known fasteners.

### SUMMARY OF INVENTION

Aspects of the invention are set out in the independent claim. Dependent claims describe optional features.

In one aspect, there is provided a fastener, for operably coupling a cooling module to a support frame, particularly of a vehicle, comprising a body, enclosingly defining an internal space and extending substantially within a first plane, including at least one coupling member, extending outwardly from a peripheral edge of said body along a first axis coplanar with said first plane and configured to be operably coupled to a bracket member of the support frame along said first axis; and an internal bearing member, provided within said internal space of and operably coupled to said body, having a journal receptacle therethrough configured to receivingly retain a coupling pin of the cooling module along a second axis that is substantially perpendicular to said first plane, wherein said internal bearing member is integrally formed with said body.

This provides the advantage of a less complex, and thus less expensive, manufacturing process of such a fastener. Moreover, the one-part fastener provides the advantage that it does not need to be assembled from various components prior to use.

Advantageously, said internal bearing member may be elastically coupled to said body.

This provides the advantage that the fastener can absorb vibrations during use. Thus, a vibration-dampening one-part fastener may be provided. Such vibration dampening may be beneficial to avoid or minimise damage to the cooling module and/or the support frame, during use.

Advantageously, said internal bearing member may comprise at least one leg extending, within said first plane, from an outer wall of said internal bearing member to an internal wall of said body.

Advantageously, said internal bearing member may comprise a first leg extending, within said first plane, along a first leg axis from said outer wall of said internal bearing member to a first portion of said internal wall; and a second leg extending, within said first plane, along a second leg axis, from said outer wall of said internal bearing member to a second portion of said internal wall, wherein said first leg axis and said second leg axis are substantially perpendicular.

In some other embodiments, said first leg axis and said second leg axis may be substantially parallel, or substantially coaxial.

Advantageously, said internal bearing member may further comprise at least one support leg extending, within said first plane, from said first portion of said internal wall to said second portion of said internal wall.

Advantageously, said internal bearing member may comprise at least one rib extending, within said first plane, outwardly from an outer wall of said internal bearing member; and wherein said body comprises at least one corresponding recess that receivingly retains said at least one rib.

### BRIEF DESCRIPTION OF THE DRAWINGS

An example embodiment of the invention is now described, by way of example only, hereinafter with reference to the accompanying drawings, in which:
**Figure 1** illustrates a front view of a cooling module including a fastener according to an example embodiment of the present invention;
**Figure 2** illustrates a front view of a fastener according to an example embodiment of the present invention;
**Figure 3** illustrates a perspective view of the fastener shown in Figure 2;
**Figure 4** illustrates another front view of the fastener shown in Figure 2 when subjected to an applied force, and
**Figure 5** illustrates a graph demonstrating the performance of a fastener according to an example embodiment of the present invention.

### DETAILED DESCRIPTION

The described example embodiment relates to a fastener, and in particular a fastener for operably coupling a cooling module to a support frame, for example, of a vehicle.

Certain terminology is used in the following description for convenience only and is not limiting. The words 'upper' and 'lower' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. a central axis), the particular meaning being readily apparent from the context of the description. Further, the terms 'proximal' (i.e. nearer to) and 'distal' (i.e. away from) designate positions relative to a body or a point of attachment (e.g. a screw head).

Further, as used herein, the terms 'connected', 'affixed', 'coupled' and the like are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner. Like reference numerals are used to depict like features throughout.

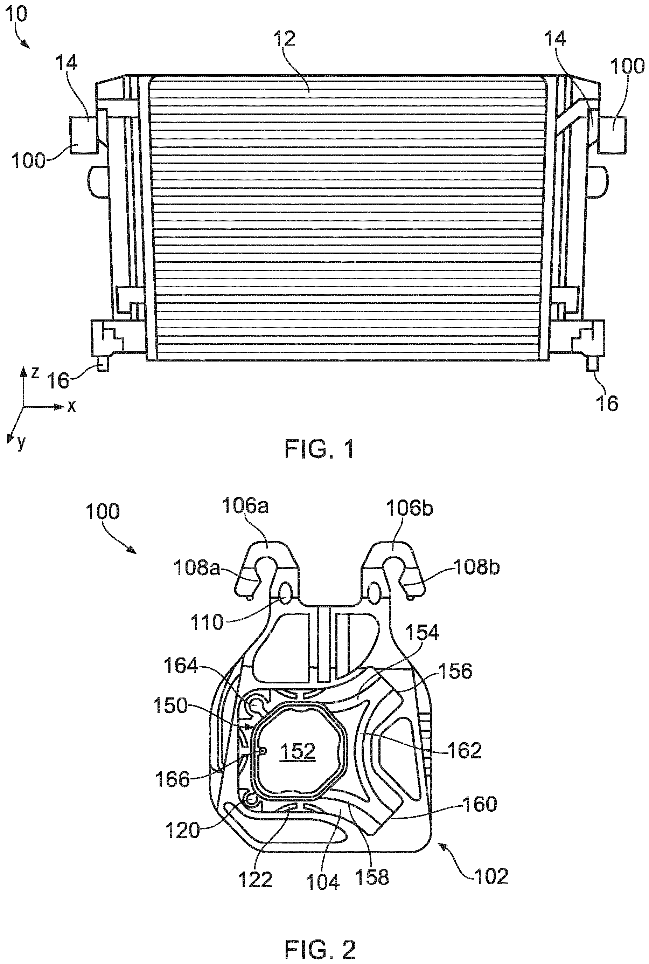

Figure 1 illustrates a cooling assembly 10 of a vehicle including a cooling module 12 that is arranged to be affixed to a support frame (not shown). Any appropriate support frame may be used, for example, a support frame including an upper and a lower cross member extending in parallel to one another and connected to one another at their distal and proximal ends by a pair of lateral members. Thus, the support frame may be substantially rectangular.

The cooling module 12, provided in the form of a vehicle radiator, includes a pair of upper coupling pins 14 and a pair of lower coupling pins 16. The upper coupling pins 14 generally extend laterally outwardly from lateral walls of the cooling module 12. The lower coupling pins 16 generally extend longitudinally outwardly from a lower portion of the lateral walls of the cooling module 12. That is, the upper coupling pins 14 and the lower coupling pins 16 extend in directions that are perpendicularly with respect to one another. The upper coupling pins 14 are engaged with a fastener 100 as described further herein.

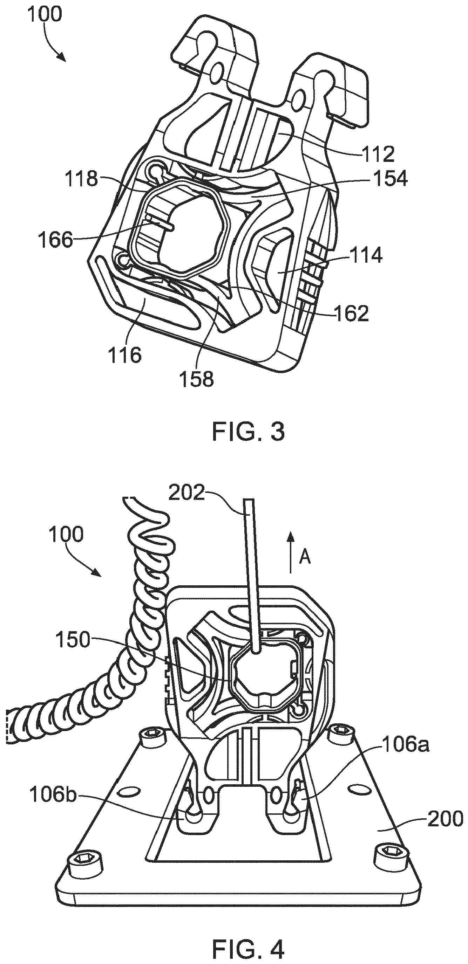

Figures 2 and 3 illustrate an example embodiment of a fastener 100 in accordance with the present invention. The fastener 100 includes a generally planar, and substantially rectangular, body 102 defining an enclosed internal space 104. The internal space 104 may be any suitable shape. In the depicted embodiment, the internal space 104 is substantially Y-shaped. The body 102 further includes a first coupling member 106a and a second coupling member 106b, provided in the form of hooks extending from a periphery or an outer wall of the body 102. Each coupling member 106a, 106b is provided with a detent 108a, 108b. Each coupling member 106a, 106b is further provided with an aperture 110. The body 102 is also provided with a plurality of cut-out portions (see Figure 3) 112, 114, 116 which may aid in reducing the amount of material used in the body 102, so as to reduce weight, or to modify structural properties of the body 102.

The internal space 104 of the body 102 is provided with an internal wall 118, or an internal surface, extending around and enclosing the internal space 104. The internal wall 118 is provided with a pair of recessed protrusions 120, each one is configured to receive a respective one of ribs 164 provided on the integrally formed internal bearing member 150, as discussed further below (each one of the recessed protrusions may be provided on a different corner formed by the internal wall 118). Furthermore, different sections of the internal wall 118 are provided with pairs of deflecting arms 122. In this example embodiment, three pairs of deflecting arms 122 may be distributed over three sides (i.e. three sections) of the internal wall 118 (i.e. one pair of deflecting arms for each one of the three sides of the internal wall 118). However, any number of deflecting arms 122 may be provided. The pair of deflecting arms 122 may be elastically deformable, so as to deflect the internal bearing member 150 to its original position and/or absorb any kinetic energy that might be transferred from the cooling module 12 (e.g. when the car is moving).

The internal bearing member 150 may be provided within the internal space 104 of the body 102. The internal bearing member 150 is integrally formed with the body 102. That is, the internal bearing member 150 and the body 102 form a single piece. The internal bearing member 150 is formed as a substantially cylindrical wall having an approximate circular cross-section. However, other cross-section are equally contemplated. The internal bearing member 150 is provided with a journal receptacle 152 arranged to receive and retain the upper coupling pin 14 of the cooling module 12 (see Figure 1), when in use. The journal receptacle 152 may securingly retain the upper coupling pin 14 by a friction-fit, a clip-fit or the like. The journal receptacle 152 may be provided with one or more coupling features that correspond to like features on the upper coupling pin 14.

Further, the internal bearing member 150 may be provided with a first leg 154, extending from a peripheral or an outer wall of the internal bearing member 150 to a first portion 156 of the internal wall 118 of the body 102. The internal bearing member 150 may be provided with a second leg 158, extending from the outer wall of the internal bearing member 150 to a second portion 160, different to the first portion 156, of the internal wall 118 of the body 102. As shown best in Figure 2, the first leg 154 and the second leg 158 extend substantially perpendicularly with respect to one another within the internal space 104.

The first leg 154 and the second leg 158 may be integrally formed with the internal wall 118 of the body 102. The first leg 154 and the second leg 158 are substantially arcuate and have resiliency, or are elastically deformable, thereby allowing the internal bearing member 150 to absorb vibrations during use. In other embodiments, the legs 154, 158 may assume other suitable orientations, shapes, directions or the like. For example, in other embodiments the body 102 may have a single leg or any other suitable number of legs.

There is further provided a support leg 162 (i.e. a strut between sections of the internal wall 118 within the internal space 104), extending from the first portion 156 of the internal wall 118 to the second portion 160 of the internal wall 118. In this particular example, the support leg 162 is substantially arcuate. The support leg 162 may provide structural support to the first and second leg 154, as well as the internal bearing member 150 so as to prevent damage to the same during use.

Each one of the pair of ribs 164 may be sized and shaped to couplingly engage with the recessed protrusions 120 of the body 102. As best shown in Figure 2, the ribs 164 are each movably received within the recesses of the recessed protrusions 120 of the body 102 and will be operably retained therein during use. Furthermore, the internal bearing member 150 includes an internal elongate spine 166 adapted to provide structural support to the internal bearing member 150 and/or couple to a corresponding feature provided on the coupling pin 14 of the cooling module 12 (see Figure 1).

The fastener 100, including both the body 102 and the internal bearing member 150, may generally be composed of a thermoplastic polymer. It may be preferable that the fastener 100 is composed of a polyamide, such as nylon-66. Most preferably, the fastener 100 comprises nylon-66 having a filler of approximately 30% by weight, such as glass fibres. This composition provides excellent strength and structural stability for such fasteners. However, it is understood by the person skilled in the art that any other suitable material may be used.

The fastener 100 may be manufactured by any appropriate manufacturing technique, such as injection moulding or extruding.

The assembly, function and use of an example embodiment of the fastener of the present invention is now described referring to Figures 1 to 3. Here, the cooling module 12 is firstly positioned such that lower coupling pins 16 are coupled to a fastener provided on a lower cross member of the support frame. This is achieved by moving the cooling module 12 in a longitudinal, e.g. 'Z-', direction into engagement with the corresponding fasteners. Then, the cooling module 12, having pre-assembled fasteners 100 at their upper coupling pins 16, is coupled to a pair of bracket members provided at an upper portion of the lateral members of the support frame. Here, the fasteners 100 serve to operably couple to the pair of bracket members. This is achieved by moving the cooling module 12 in a lateral, e.g. 'X-', direction towards the corresponding brackets. The cooling module 12 is then assembled to the support frame.

Figure 4 illustrates a test set-up where the fastener 100 is coupled to a first component 200 by virtue of the first and second coupling members 106a, 106b and a second component (i.e. simulated by the string 202). In particular, the string 202 (i.e. second component) is attached to the internal bearing member 150, which is subjected to a force applied in a longitudinal, e.g. 'Z-', direction, as indicated by arrow A. Thus, the test set-up illustrated in Figure 4 is representative of the forces applied to the fastener 100 during use, that is, when coupled to a cooling module and a support frame.

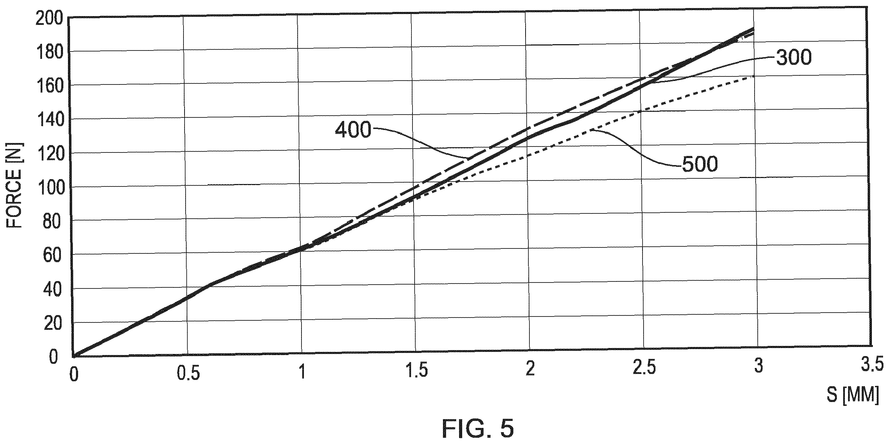

Figure 5 illustrates the test results, and thus the performance, of the fastener 100 when a force is applied in the direction indicated by arrow A. Here, a force profile 300 of a known two-part fastener of the prior art is compared with a force profile 400 of a first sample of the one-part fastener of the present invention and a force profile 500 of a second sample of the one-part fastener of the present invention. As can be seen in Figure 5, the force profiles 400, 500 of the fastener of the present invention is closely aligned to the force profile 300 of known two-part fasteners. Therefore, the less complex and cheaper fastener of the present invention is capable to match or at least come close to the structural properties and functional features of the known more complex and more expensive two-part fasteners.

It will be appreciated by persons skilled in the art that the above embodiment has been described by way of example only and not in any limitative sense, and that various alterations and modifications are possible without departing from the scope of the invention as defined by the appended claims. Various modifications to the detailed design as described above are possible, for example, variations may exist in shape, size, arrangement, assembly, materials or the like.

## Claims

1. A fastener for operably coupling a cooling module to a support frame, particularly of a vehicle, comprising:
a body, enclosingly defining an internal space and extending substantially within a first plane, including at least one coupling member, extending outwardly from a peripheral edge of said body along a first axis coplanar with said first plane and configured to be operably coupled to a bracket member of the support frame along said first axis; and
an internal bearing member, provided within and operably coupled to said internal space of said body, having a journal receptacle therethrough configured to receivingly retain a coupling pin of the cooling module along a second axis that is substantially perpendicular to said first plane, wherein said internal bearing member is integrally formed with said body.

2. A fastener according to claim 1, wherein said internal bearing member is elastically coupled to said body.

3. A fastener according to claim 2, wherein said internal bearing member comprises at least one leg extending, within said first plane, from an outer wall of said internal bearing member to an internal wall of said body.

4. A fastener according to claim 3, wherein said internal bearing member comprises:
a first leg extending, within said first plane, along a first leg axis from said outer wall of said internal bearing member to a first portion of said internal wall; and
a second leg extending, within said first plane, along a second leg axis from said outer wall of said internal bearing member to a second portion of said internal wall, and
wherein said first leg axis and said second leg axis are substantially perpendicular to each other.

5. A fastener according to claim 4, wherein said internal bearing member further comprises at least one support leg extending, within said first plane, from said first portion of said internal wall to said second portion of said internal wall.

6. A fastener according to any one of the preceding claims, wherein said internal bearing member comprises at least one rib extending, within said first plane, outwardly from an outer wall of said internal bearing member; and wherein said body comprises at least one corresponding recess adapted to receivingly retain said at least one rib.
